# EUROPÄISCHE PATENTSCHRIFT

(11) **EP 0 468 216 B1**
(45) Veröffentlichungstag und Bekanntmachung des Hinweises auf die Patenterteilung: **08.09.1993**
(21) Anmeldenummer: 91110583.1
(22) Anmeldetag: 26.06.1991
(51) Int. Cl.: B60G 17/04, B60G 17/08

(54) **Vorrichtung zur Neigungskompensation des Aufbaus von Kraftfahrzeugen**
Device to compensate for the inclination of the bodywork of a motor car
Dispositif pour compenser l'inclinaison de la caisse d'un véhicule automobile

(30) Priorität: 20.07.1990 DE 4023065
(43) Veröffentlichungstag der Anmeldung: 29.01.1992
(73) Patentinhaber: Volkswagen Aktiengesellschaft, 38436 Wolfsburg (DE)
(72) Erfinder: Poschmann, Michael, W-3306 Lehre (DE)

(56) Entgegenhaltungen:
- EP-A- 0 190 944
- EP-A- 0 373 327
- EP-A- 0 424 784
- DE-A- 3 814 568
- DE-B- 1 261 409
- GB-A- 2 199 618
- PATENT ABSTRACTS OF JAPAN vol. 9, no. 183 (M-400)(1906) 30. Juli 1985 & JP-A-60 050 008 ( KAYABA KOGYO ) 19. März 1985

## Beschreibung

Die Erfindung bezieht sich auf eine Vorrichtung zur Neigungskompensation des Aufbaus sowie zur Schwingungsdämpfung von Kraftfahrzeugen der im Oberbegriff des Patentanspruchs 1 genannten Art.

Im Bemühen, die Fahrsicherheit und den Fahrkomfort weiter zu verbessern, werden die Fahrwerke von Personenkraftfahrzeugen zunehmend mit zwischen Fahrzeugaufbau und Fahrzeugrädern bzw. deren Radführungsgliedern wirksamen quasistatisch sowie dynamisch arbeitenden Verstelleinrichtungen ausgestattet, vorzugsweise in Form von hydraulischen Zweirichtungs-Stellzylindern mit nach Größe und Richtung steuerbarer Stellkraft.

Durch entsprechende Steuerung dieser hydraulischen Zweirichtungs-Stellzylinder kann unter anderem ein Nick- und/oder Wankausgleich vorgenommen werden, indem durch die Zweirichtungs-Stellzylinder den jeweiligen Nick- und/oder Wankmomenten entgegengerichtete Momente aufgebracht werden. Das Kraftfahrzeug kann auf diese Weise "horizontiert" werden und im übrigen können dadurch die Fahreigenschaften des Fahrzeugs in Abhängigkeit von der jeweiligen Fahrsituation günstig beeinflußt werden.

An sich wäre es denkbar, allein mit solchen zwischen Fahrzeugaufbau und Fahrzeugrädern wirksamen aktiven Stelleinrichtungen den Fahrzeugaufbau abzustützen und ruhig zu halten, d. h. sowohl für eine ausreichende Federung sowie Schwingungsdämpfung als auch für einen Wank- und/oder Nickausgleich o. ä. zu sorgen. Für eine derartige Lösung müßten jedoch vergleichsweise große Stelleistungen zur Verfügung gestellt werden, was aufwendig und teuer ist und deshalb in der Praxis wohl nur in besonderen Anwendungsfällen, wie z. B. im Rennsport oder in den allerobersten Fahrzeugklassen realisiert werden dürfte.

Für die Praxis sinnvoller erscheint es, solche aktiven Verstelleinrichtungen, d. h. hydraulische Zweirichtungs-Stellzylinder mit nach Größe und Richtung steuerbarer Stellkraft ausschließlich zum Ausgleich von Wank- und/oder Nickbewegungen o. ä. des Fahrzeugs einzusetzen und zur eigentlichen Fahrzeugabfederung übliche Federelemente sowie zur notwendigen Schwingungsdämpfung des Fahrzeuges übliche Teleskop-Stoßdämpfer einzusetzen. Die hydraulischen Zweirichtungs-Stellzylinder müssen dann lediglich in der Lage sein, den Wank- und/oder Nickmomenten entgegengerichtete Momente aufzubringen, wozu nur noch vergleichsweise geringe Stelleistungen erforderlich sind.

Der Erfindung liegt nun die Aufgabe zugrunde, eine vergleichsweise wenig Bauraum erfordernde Vorrichtung der im Oberbegriff des Patentanspruchs 1 genannten Art zu schaffen.

Diese Aufgabe wird durch die Merkmale des Patentanspruchs 1 gelöst.

Erfindungsgemäß sind also jeweils ein hydraulischer Teleskop-Stoßdämpfer und ein hydraulischer Zweirichtungs-Stellzylinder mit nach Größe und Richtung steuerbarer Stellkraft unmittelbar zu einer integrierten Baueinheit zusammengefaßt, in welcher der Teleskop-Stoßdämpfer den Zweirichtungs-Stellzylinder konzentrisch umschließt.

Vorteilhafte Ausgestaltungen und Weiterbildungen der Erfindung sind in den Unteransprüchen angegeben.

Die erfindungsgemäße Vorrichtung stellt eine besonders kompakte Baueinheit dar, für deren Einbau nicht mehr Bauraum benötigt wird als für serienmäßige Federbeinanordnungen.

Anhand eines in der Zeichnung dargestellten Ausführungsbeispieles wird die Erfindung nachstehend näher erläutert.

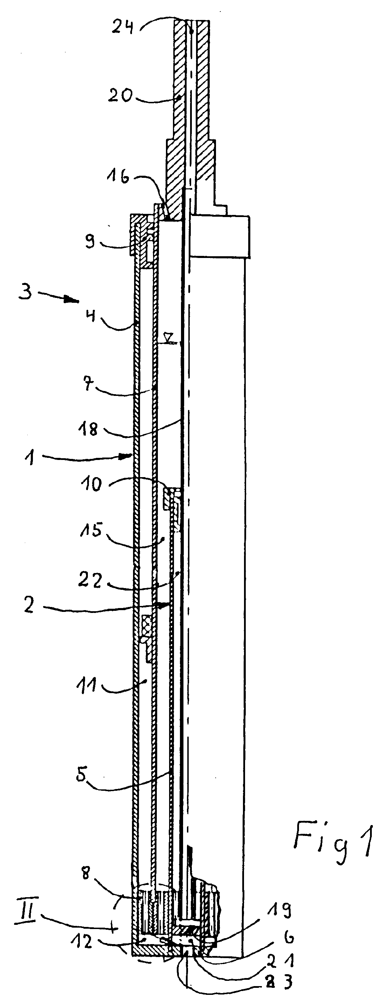

In der Zeichnung zeigen
- Fig. 1: einen Teillängsschnitt der erfindungsgemäßen Vorrichtung und
- Fig. 2: eine Detaildarstellung des in Fig. 1 mit II bezifferten Ausschnitts dieser Vorrichtung.

In der Zeichnung sind jeweils nur die für das Verständnis der Erfindung notwendigen Einzelheiten der erfindungsgemäßen Vorrichtung dargestellt.

Nicht dargestellt sind insbesondere die zur Steuerung und/oder Regelung des integrierten hydraulischen Zweirichtungs-Stellzylinders notwendigen Druckquellen sowie elektronischen Steuer- und/oder Regeleinrichtungen. Vorzugsweise wird zur Steuerung des hydraulischen Zweirichtungs-Stellzylinders jedoch ein als offener Kreis ausgebildeter Hydraulikkreis mit ständig fördernder Hydraulikpumpe eingesetzt, wobei steuerbare Ventileinrichtungen als steuerbare Drosselventile ausgebildet sind, deren Durchflußquerschnitt jeweils zwischen einem von Null verschiedenen Mindestwert und einem Höchstwert verstellbar sind, wie dies beispielsweise in der nicht vorveröffentlichten prioritätsälteren deutschen Patentanmeldung P 39 35 595 offenbart ist.

Die erfindungsgemäße Vorrichtung zur Neigungskompensation des Aufbaus sowie zur Schwingungsdämpfung von Kraftfahrzeugen besteht jeweils aus einem hydraulischen Teleskopstoßdämpfer 1 und einem hydraulischen Zweirichtungs-Stellzylinder 2 mit nach Größe und Richtung steuerbarer Stellkraft, welche konzentrisch ineinandergeschachtelt und zu einer integrierten Baueinheit 3 zusammengefaßt sind. Der hydraulische Zweirichtungs-Stellzylinder 2 wird dabei konzentrisch vom Teleskop-Stoßdämpfer 1 umschlossen.

Die Baueinheit 3 weist ein äußeres erstes Zylinderrohr 4, welches als Dämpferrohr des Teleskop-Stoßdämpfers 1 dient, sowie ein darin konzentrisch angeordnetes kürzeres inneres zweites Zylinderrohr 5 auf, welches als Zylinderrohr des Zweirichtungs-Stellzylinders 2 dient. Beide Zylinderrohre sind einenends durch ein gemeinsames Bodenteil 6 nach außen abgeschlossen. Anderenends sind beide Zylinderrohre jeweils durch eine übliche kappenförmige Kolbenstangenführung 9 bzw. 10 abgeschlossen.

Die in der Kolbenstangenführung 9 gleitend geführte Kolbenstange 7 des Teleskop-Stoßdämpfers 1 ist als Rohr ausgebildet und trägt einen als Ringkolben ausgebildeten Dämpferkolben 8, mit dem sie in den zwischen dem äußeren und dem inneren Zylinderrohr 4 bzw. 5 gebildeten Ringraum eingreift. Der Ringkolben 8 liegt dabei mit seinem Außenumfang gleitend am äußeren Zylinderrohr 4 und mit seinem Innenumfang gleitend am inneren Zylinderrohr 5 an.

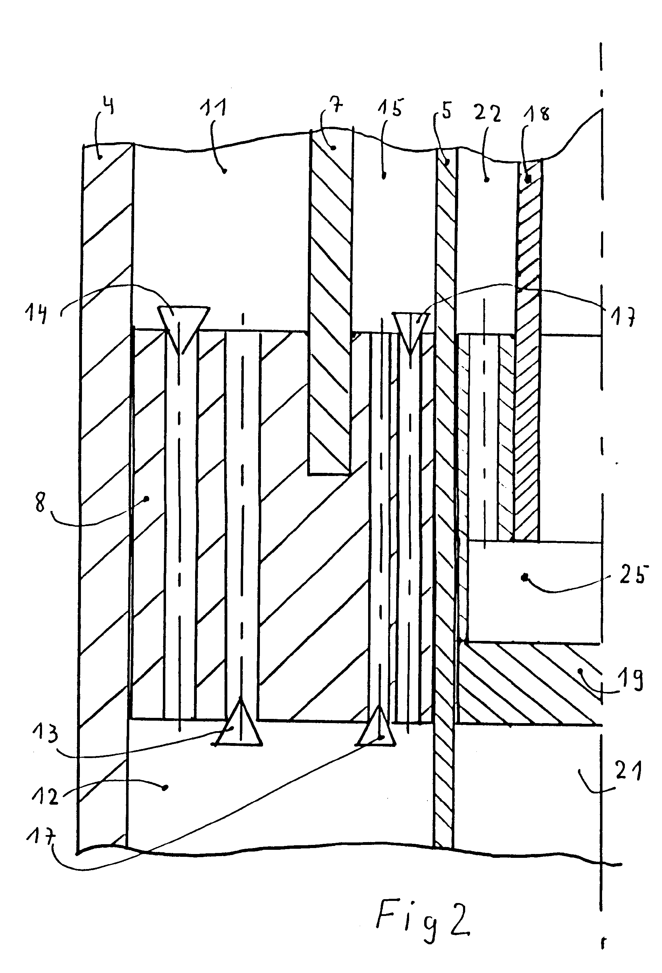

Der zwischen dem äußeren Zylinderrohr 4 und der hohlen Kolbenstange 7 gebildete Ringraum 11 sowie der unterhalb des Dämpferkolbens 8 zwischen dem äußeren und dem inneren Zylinderrohr 4 bzw. 5 einerseits sowie dem Dämpferkolben 8 und dem Bodenteil 6 andererseits gebildete Ringraum 12 bilden die fluidgefüllte Arbeitskammer des Teleskop-Stoßdämpfers 1. Beide Ringräume sind in üblicher Weise durch im Dämpferkolben befindliche Dämpferventile miteinander verbunden. In der Detaildarstellung der Fig. 2 sind diese Dämpferventile prinzipienhaft angedeutet und für die Zugstufe mit 13 sowie für die Druckstufe mit 14 beziffert.

Als Volumenausgleichskammer des Teleskop-Stoßdämpfers dient der zwischen dem inneren zweiten Zylinderrohr 5 und der Rohrwand der Dämpfer-Kolbenstange 7 gebildete Ringraum 15, der in üblicher Weise über eine nach außen geführte Bohrung 16 entlüftet ist bzw. mit der Atmosphäre in Verbindung steht. Die Volumenausgleichskammer, d. h. der Ringraum 15 steht mit der Arbeitskammer, d. h. mit dem Ringraum 12 über im Dämpferkolben 8 angeordnete Drosselventile in Verbindung, welche bezüglich ihres konstruktiven Aufbaus und ihrer Funktion üblichen Bodenventilen entsprechen und in der Detaildarstellung der Fig. 2 mit 17 angedeutet sind.
Bei der erfindungsgemäßen Vorrichtung ist also im Gegensatz zu bekannten Teleskop-Stoßdämpfern die Arbeitskammer 11/12 radial außenliegend und die Volumenausgleichskammer 15 radial innenliegend angeordnet.

Die in das innere Zylinderrohr 5 eintauchende Stellzylinder-Kolbenstange 18 ist ebenfalls als Rohr ausgebildet und trägt an ihrem ins Zylinderrohr eintauchenden Ende einen ventillosen Stellkolben 19. Ihr durch die Kolbenstangenführung 10 aus dem inneren Zylinderrohr 5 heraustretendes Ende ist wie die Dämpfer-Kolbenstange 7 zug- und drucksteif an einem Endstück 20 befestigt, welches die in der hohlen Dämpfer-Kolbenstange 7 gebildete Volumenausgleichskammer 15 nach außen begrenzt und zur Befestigung der Baueinheit 3 z. B. am Fahrzeugaufbau dient. Bezüglich seiner äußeren Gestaltung entspricht es üblichen Federbeinanordnungen.

Die Arbeitskammer des Zweirichtungs-Stellzylinders 2 wird durch den Trennkolben 19 in üblicher Weise in eine unterhalb des Trennkolbens liegende erste Teilkammer 21 und in eine oberhalb des Trennkolbens zwischen der Stellzylinder-Kolbenstange 18 und dem inneren Zylinderrohr 5 liegende zweite Teilkammer 22 unterteilt.

Über einen im gemeinsamen Bodenteil 6 der beiden Zylinderrohre 4, 5 angeordneten ersten Leitungsanschluß 23 sowie über einen im gemeinsamen Endstück 20 der beiden Kolbenstangen 7, 18 angeordneten zweiten Leitungsanschluß können die beiden Teilkammern 21 und 22 des Zweirichtungs-Stellzylinders 2 durch die nicht weiter dargestellte elektronische Steuer- und Regeleinrichtung den jeweiligen Regelerfordernissen entsprechend mit Hydraulikdruck beaufschlagt werden. Eine Druckbeaufschlagung der unteren ersten Teilkammer über den ersten Leitungsanschluß 23 bewirkt dabei ein Auseinanderfahren des Zweirichtungs-Stellzylinders 2, d. h. eine axiale Verlängerung der Baueinheit 3; in entsprechender Weise bewirkt eine Druckbeaufschlagung der oberen zweiten Teilkammer 22 über den zweiten Leitungsanschluß 24 ein Zusammenfahren des Stellzylinders, d. h. eine axiale Verkürzung der Baueinheit. Ein axiales Verlängern der Baueinheit 3 erzeugt eine drückende und ein axiales Verkürzen der Baueinheit eine ziehende Stellkraft, wobei die Größe der erzeugten Stellkraft von der Höhe des aufgebrachten Hydraulikdrucks abhängt.

Bei nicht aktivem Stellzylinder 2, d. h. wenn dessen beiden Teilkammern 21 und 22 von der nicht weiter dargestellten äußeren Steuer- und Regeleinrichtung kein Hydraulikdruck aufgeprägt wird, arbeitet die integrierte Baueinheit 3 in üblicher Weise schwingungsdämpfend als Stoßdämpfer, dessen Dämpferkraft bzw. Dämpfercharakteristik u. a. durch die in Fig. 2 schematisch angedeuteten Zug- und Druckventile 13, 14 des Dämpferkolbens 8 bestimmt wird. Der über die Stellzylinder-Kolbenstange 18 mit der Dämpfer-Kolbenstange 7 und dem Dämpferkolben 8 starr verbundene Stellkolben 19 des Zweirichtungs-Stellzylinders 2 läuft dabei lediglich leer bzw. lastlos mit. Dieser Betriebszustand liegt stets nur dann vor, wenn von der Baueinheit 3 keine kompensierenden Stellkräfte bzw. Stellmomente aufzubringen sind, wenn also z. B. keinerlei Wank- und/oder Nickbewegungen stattfinden, sondern wenn lediglich fahrbahnbedingte Schwingungen zu dämpfen sind.

Wenn jedoch betriebsmäßig - z. B. beim Durchfahren von Kurven bzw. beim Bremsen und/oder beim Beschleunigen - Wank- und/oder Nickmomente o. ä. auftreten und wenn diesen Momenten von der integrierten Baueinheit 3 entgegengewirkt werden soll, dann wird je nach Regelerfordernis entweder die obere Teilkammer 22 oder die untere Teilkammer 21 der Arbeitskammer des Zweirichtungs-Stellzylinders 2 über die Leitungsanschlüsse 23 bzw. 24 mit Hydraulikdruck geeigneter Höhe beaufschlagt, um eine diesen störenden Wank- bzw. Nickmomenten entgegenwirkende Zug- oder Druckkraft zu erzeugen.

Es versteht sich, daß für die Neigungskompensation des Fahrzeugaufbaus bzw. für die Kompensation von Wank- und/oder Nickmomenten nicht nur eine sondern mehrere der erfindungsgemäßen Vorrichtungen einzusetzen sind; im allgemeinen wird jedem der Fahrzeugräder eine, jeweils zwischen Fahrzeugaufbau und Fahrzeugrad wirksame Baueinheit zugeordnet, wie ja im allgemeinen auch jedem Rad ein eigener Teleskop-Stoßdämpfer zugeordnet ist. Es versteht sich, daß die den einzelnen Fahrzeugrädern zugeordneten Baueinheiten 3 von der nicht weiter dargestellten elektronischen Steuer- und Regeleinrichtung zur Neigungskompensation jeweils sehr unterschiedlich ausgesteuert werden müssen. Zur Kompensation von z. B. bei Kurvenfahrt auftretenden Wankmomenten müssen z. B. die den kurvenäußeren Rädern zugeordneten Baueinheiten derart ausgesteuert werden, daß sie Druckkräfte abgeben, während die den kurveninneren Rädern zugeordneten Baueinheiten gleichzeitig entsprechende Zugkräfte aufbringen müssen. In ganz entsprechender Weise müssen beim Bremsnicken die den Vorderrädern zugeordneten Baueinheiten Druckkräfte und die den Hinterrädern zugeordneten Vorrichtungen Zugkräfte erzeugen.

Es hängt ganz von der Art des zur Steuerung und Regelung des hydraulischen Zweirichtungs-Stellzylinders 2 eingesetzen nicht weiter dargestellten äußeren Hydraulikkreises bzw. der dabei eingesetzten elektronischen Steuer- und Regeleinrichtung ab, ob es während der momentenkompensierenden Stellaktivitäten der Zweirichtungs-Stellzylinder 2 noch zu - fahrbahnbedingten - vertikalen Radschwingungen relativ zum Fahrzeugaufbau kommen kann oder nicht.
Wenn der steuernde und regelnde äußere Hydraulikkreis des Zweirichtungs-Stellzylinders 2 als offener Kreis mit ständig fördernder Hydraulikpumpe und mit als steuerbare Drosselventile ausgebildeten steuerbaren Ventileinrichtungen, deren Durchflußquerschnitte jeweils zwischen einem von Null verschiedenen Mindestwert und einem Höchstwert verstellbar sind, ausgebildet ist wie in der prioritätsälteren, nicht vorveröffentlichten deutschen Patentanmeldung P 39 35 595 beschrieben, dann werden solchen relativen Radbewegungen ermöglicht, die dann in üblicher Weise vom Teleskop-Stoßdämpfer 1 gedämpft werden; trotz Stellaktivität des Zweirichtungs-Stellzylinders 2 liegen dann vergleichsweise komfortable Fahreigenschaften vor.
Wenn der steuernde und regelnde äußere Hydraulikkreis des Zweirichtungs-Stellzylinders 2 dagegen in üblicher Weise als geschlossener Kreis und mit nur ein- und ausschaltbaren Ventileinrichtungen ausgebildet ist, wie z. B. in der DE-OS 27 38 455 beschrieben, dann werden natürlich auch bei Einsatz der erfindungsgemäßen Vorrichtung während der Stellaktivitäten des Zweirichtungs-Stellzylinders 2 Fahrbahnstöße in für aktive Fahrwerke mit solchen Steuer- und Regeleinrichtungen üblicherweise voll in den Fahrzeugaufbau eingeleitet, weil dann relative vertikale Radschwingungen vom aktiven Stellzylinder verhindert werden.

Für die erfindungsgemäße Vorrichtung wird in vorteilhafter Weise grundsätzlich - gleiche Ein- und Ausfederwege vorausgesetzt - weder axial noch radial mehr Bauraum als für übliche Federbeine bzw. Federdämpfer. Es hat sich gezeigt, daß die baulichen Außenabmessungen der erfindungsgemäßen Vorrichtung bei gleichgroßen Federwegen derart bemessen werden können, daß sie exakt den Abmessungen serienmäßiger Federbeine entsprechen, so daß für die Anlenkung der Vorrichtung am Fahrzeugaufbau bzw. am Radführungsglied (z. B. Schwenklager) i. a. keine konstruktiven Änderungen erforderlich sind.

Von Vorteil für die Leichtgängigkeit bzw. Ansprechempfindlichkeit der schwingungsdämpfenden Vorrichtung ist es, wenn der Stellkolben 19 des Zweirichtungs-Stellzylinders 2 axial zumindest annähernd in Höhe des Dämpferkolbens 8 angeordnet ist, wie dies im dargestellten Ausführungsbeispiel der Fall ist. Durch eine solche räumliche Zuordnung wird die Leichtgängigkeit bzw. Ansprechempfindlichkeit der schwingungsdämpfenden Vorrichtung unterstützt bzw. bewahrt, da auf die Baueinheit 3 einwirkende radaufstandskraftbedingte Biegemomente dann im wesentlichen ausschließlich über den Außenumfang des ringförmigen Dämpferkolbens 8 sowie über die Kolbenstangenführung 9 des Teleskop-Stoßdämpfers 1 abgestützt werden, wie dies bei üblichen Federbeinen der Fall ist.

Zur Verbesserung der Ansprechempfindlichkeit kann es auch von Vorteil sein, das innere zweite Zylinderrohr 5 nicht wie im dargestellten Ausführungsbeispiel starr am gemeinsamen Bodenteil 6 zu befestigen, sondern derart, daß es in radialer Richtung jeweils etwas nachgeben kann, in axialer Richtung dagegen festgelegt ist. Selbstverständlich muß auch eine solche Verbindung druckdicht ausgebildet sein.

## Patentansprüche

1. Vorrichtung zur Neigungskompensation des Aufbaus sowie zur Schwingungsdämpfung von Kraftfahrzeugen, mit einem hydraulischen Teleskop-Stoßdämpfer (1) und einem hydraulischen Zweirichtungs-Stellzylinder (2) mit nach Größe und Richtung steuerbarer Stellkraft,
dadurch gekennzeichnet, daß der Teleskop-Stoßdämpfer (1) und der Zweirichtungs-Stellzylinder (2) zu einer integrierten Baueinheit (3) zusammengefaßt sind, in welcher der Teleskop-Stoßdämpfer (1) den Zweirichtungs-Stellzylinder (2) konzentrisch umschließt.

2. Vorrichtung nach Anspruch 1,
gekennzeichnet durch folgende Merkmale:
a) Die integrierte Baueinheit (3) weist ein als Dämpferrohr dienendes äußeres erstes Zylinderrohr (4) sowie ein darin konzentrisch angeordnetes inneres zweites Zylinderrohr (5) auf, welches als Zylinderrohr des Zweirichtungs-Stellzylinders (2) dient, wobei beide Zylinderrohre (4, 5) einenends durch ein gemeinsames Bodenteil (6) nach außen abgeschlossen sind.
b) Die Dämpfer-Kolbenstange (7) ist als Rohr ausgebildet und greift mit ihrem einen Dämpferkolben (8) tragenden einen Ende in einen zwischen dem äußeren und dem inneren Zylinderrohr (4 bzw. 5) gebildeten Ringraum ein, wobei der Dämpferkolben (8) als Ringkolben ausgebildet ist, der mit seinem Außenumfang gleitend am äußeren Zylinderrohr (4) und mit seinem Innenumfang gleitend am inneren Zylinderrohr (5) anliegt.
c) Der zwischen dem äußeren und dem inneren Zylinderrohr (4 bzw. 5) einerseits sowie zwischen dem ringförmigen Dämpferkolben (8) und dem Bodenteil (6) andererseits gebildete fluidgefüllte Zylinderringraum (12) steht einerseits über im Dämpferkolben (8) befindliche Dämpferventile (13, 14) mit dem zwischen dem äußeren Zylinderrohr (4) und der Dämpfer-Kolbenstange (7) gebildeten fluidgefüllten radial äußeren Teilringraum (11) und andererseits über bekannten Bodenventilen entsprechende Drosselventile (17) mit dem zwischen der Dämpfer-Kolbenstange (7) und dem inneren Zylinderrohr (5) gebildeten und als Volumenausgleichskammer dienenden radial inneren Teilringraum (15) in Verbindung.
d) Die ebenfalls als Rohr ausgebildete und an ihrem in das innere Zylinderrohr (5) eintauchenden einen Ende einen ventillosen Stellkolben (19) tragende Stellzylinder-Kolbenstange (18) ist mit ihrem anderen Ende zusammen mit der Dämpfer-Kolbenstange (7) und wie diese zug- und drucksteif an einem ihnen gemeinsamen Endstück (20) befestigt.
e) Zur Druckölversorgung der durch den Stellkolben (19) getrennten beiden Arbeitskammern (21, 22) des Zweirichtungs-Stellzylinders (2) ist einerseits im gemeinsamen Bodenteil (6) der beiden Zylinderrohre (4, 5) ein in die eine Arbeitskammer (21) führender erster Leitungsanschluß (23) und andererseits im gemeinsamen Endstück (20) der beiden Kolbenstangen (7, 18) ein über die radiale Durchlässe (25) aufweisende hohle Stellzylinder-Kolbenstange (18) mit der anderen Arbeitskammer (22) in Verbindung stehender zweiter Leitungsanschluß (24) angeordnet.

3. Vorrichtung nach Anspruch 2,
dadurch gekennzeichnet, daß der Stellkolben (19) zumindest annähernd in Höhe des Dämpferkolbens (8) angeordnet ist.

4. Vorrichtung nach Anspruch 2 oder 3,
dadurch gekennzeichnet, daß das innere zweite Zylinderrohr (5) druckdicht und in axialer Richtung fest, in radialer Richtung dagegen nachgiebig am Bodenteil (6) befestigt ist.

## Claims

1. Device for compensating the inclination of a structure as well as for the purpose of damping the vibration of motor vehicles, having a hydraulic telescopic shock absorber (1) and a hydraulic bidirectional regulating cylinder (2) having a regulating force which is controllable according to amount and direction, characterised in that the telescopic shock absorber (1) and the bidirectional regulating cylinder (2) are combined to form one integrated component (3) in which the telescopic shock absorber (1) encompasses the bidirectional regulating cylinder (2) in a concentric manner.

2. Device according to claim 1, characterised by the following features:
a) The integrated component (3) comprises an external first cylinder tube (4) which serves as a damping tube as well as an internal second cylinder tube (5) which is disposed concentrically in the first cylinder tube (4) and the second cylinder tube (5) serves as a cylinder tube of the bidirectional regulating cylinder (2), wherein the two cylinder tubes (4,5) are outwardly sealed at one end by means of a common base part (6).
b) The damping piston rod (7) is formed as a tube and engages with its one end supporting a damping piston (8) in an annular space formed between the outer and the inner cylinder tube (4 and/or 5), wherein the damping piston (8) is formed as an annular piston which rests with its outer periphery in a sliding manner against the outer cylinder tube (4) and rests with its inner periphery in a sliding manner against the internal cylinder tube (5).
c) The fluid-filled cylinder annular space (12) formed between the external and the internal cylinder tube (4 and/or 5) on the one side as well as between the annular damping piston (8) and the base part (6) on the other side is connected on the one side by way of the damping valves (13,14) located in the damping piston (8) to the fluid-filled radial external partial annular space (11) formed between the external cylinder tube (4) and the damping piston rod (7) and is connected on the other side by way of throttle valves (17) corresponding to known base valves to the radial internal partial annular space (15) which is formed between the damping piston rod (7) and the internal cylinder tube (5) and serves as a volume compensating chamber.
d) The regulating cylinder piston rod (18) likewise formed as a tube and supporting at its one end enveloped by the internal cylinder tube (5) a regulating piston (19) which does not have a valve is attached by its other end to the damping piston rod (7) and is attached, as this is, in a manner which is resistant to tension and pressure to an end piece (20) which is common to both.
e) In order to supply the two working chambers (21,22) of the bidirectional regulating cylinder (2) with oil under pressure, on the one side, a first line connection (23) leading to the working chamber (21) is disposed in the common base part (6) of the two cylinder tubes (4,5) and on the other side, a second line connection (24), which is connected to the other working chamber (22) by way of the hollow regulating cylinder piston rod (18) which comprises the radial flow-throughs (25), is disposed in the common end piece (20) of the two piston rods (7,18).

3. Device according to claim 2, characterised in that the regulating piston (19) is disposed at least almost at the level of the damping piston (8).

4. Device according to claim 2 or 3, characterised in that the internal second cylinder tube (5) is sealed against pressure and is fixedly attached to the base part (6) in the axial direction but is flexible in the radial direction.

## Revendications

1. Dispositif permettant la compensation de l'inclinaison de la caisse d'un véhicule ainsi que l'amortissement des vibrations sur véhicules automobiles, comprenant un amortisseur télescopique (1) et un vérin hydraulique bidirectionnel (2) de réglage dont la puissance de réglage est réglable quant à son amplitude et à sa direction,
caractérisé en ce que l'amortisseur télescopique (1) et le vérin bidirectionnel (2) de réglage sont regroupés en une unité intégrée (3) de construction, dans laquelle l'amortisseur télescopique (1) entoure de façon concentrique le vérin bidirectionnel (2) de réglage.

2. Dispositif selon la revendication 1, caractérisé par les caractéristiques suivantes:
a) l'unité intégrée (3) de construction comporte un premier tube cylindrique extérieur (4) servant de tube d'amortisseur ainsi qu'un second tube cylindrique (5) disposé concentriquement par rapport au premier, servant de tube-cylindre du vérin bidirectionnel (2) de réglage, les deux tubes cylindriques (4, 5) étant fermés, à l'une de leurs extrémités, par un élément de fond commun (6),
b) la tige (7) de piston de l'amortisseur est réalisée sous forme d'un tube et s'engage, par son extrémité, qui porte le piston (8) d'amortisseur, dans un espace annulaire constitué entre les tubes cylindriques extérieur et intérieur (4 et 5), le piston (8) d'amortisseur étant réalisé sous forme d'un piston annulaire, dont la périphérie extérieure entre en contact coulissant avec le tube cylindrique extérieur (4), et dont la périphérie intérieure entre en contact coulissant avec le tube cylindrique intérieur 5),
c) l'espace annulaire cylindrique (12) rempli de fluide, formé entre les tubes cylindriques extérieur et intérieur (4, 5) d'une part, et entre le piston annulaire (8) d'amortisseur et l'élément de fond (6) d'autre part, communique d'une part, par l'intermédiaire de clapets amortisseurs (13, 14) disposés dans le piston (8) d'amortisseur, avec la chambre annulaire partielle radialement extérieure (11), remplie de fluide, formée entre le tube cylindrique extérieur (4) et la tige (7) de piston de l'amortisseur, et d'autre part, par l'intermédiaire de clapets d'étranglement (17) correspondant aux clapets de fond connus, avec la chambre annulaire partielle radialement intérieure formée entre la tige (7) de piston de l'amortisseur et le tube cylindrique intérieur (5), servant de chambre de compensation de volume,
d) la tige (18) du piston de réglage, également réalisée sous forme d'un tube, dont l'extrémité, qui pénètre dans le tube cylindrique intérieur (5), porte un piston (19) de réglage dépourvu de soupapes, est fixée, par son autre extrémité, en même temps que la tige (7) de piston d'amortisseur et, tout comme cette dernière, de façon rigide en traction et en poussée, à un embout (20) commun à ces deux tiges,
e) en vue de l'alimentation en huile sous pression des deux chambres (21, 22) de travail du vérin bidirectionnel (2) de réglage, séparées l'une de l'autre par le piston (19) de réglage, on prévoit d'une part, dans l'élément de fond commun (6) des deux tubes cylindriques (4, 5), un premier raccordement (23) de conduite débouchant dans l'une (21) des chambres de travail, et d'autre part, dans l'embout commun (20) des deux tiges (7, 18) de piston, un second raccordement (24) de conduite communiquant avec l'autre chambre (22) de travail par l'intermédiaire de la tige creuse (18) de piston du vérin de réglage, qui présente des passages radiaux (25).

3. Dispositif selon la revendication 2, caractérisé en ce que le piston (19) de réglage est disposé au moins à peu près à la hauteur du piston (8) d'amortisseur.

4. Dispositif selon l'une des revendications 2 ou 3, caractérisé en ce que le second tube cylindrique intérieur (5) est fixé sur l'élément de fond (6) de façon étanche à la pression et fixe dans le sens axial, mais flexible dans le sens radial.
